# EUROPEAN PATENT APPLICATION

(11) **EP 4 723 345 A1**
(43) Date of publication of application: **08.04.2026**
(21) Application number: 25768566.9
(22) Date of filing: 04.03.2025
(51) Int. Cl.: H01M 50/333, H01M 50/35, F16B 5/02, H01M 50/204

(54) **BATTERY PACK**

(30) Priority: 07.03.2024 KR 20240032552
(71) Applicant: LG Energy Solution, Ltd., Seoul 07335 (KR)
(72) Inventor: LEE, Sang Yoon, Daejeon 34122 (KR); LEE, Hyoung Suk, Daejeon 34122 (KR)
(74) Representative: Plasseraud IP
(86) International application number: PCT/KR2025/002867
(87) International publication number: WO 2025/188042

(57) **Abstract**

Disclosed herein provides a battery pack including: a pack frame having an accommodation space; a battery cell assembly accommodated in the accommodation space of the pack frame and including a battery cell; and a venting device mounted on the pack frame, and configured to open and close an internal passage in response to pressure in the accommodation space of the pack frame, wherein the venting device is accommodated entirely within a venting passage of the pack frame provided between an inner wall and an outer wall of the pack frame.

## Description

### [Technical Field]

The present disclosure relates to a battery pack, and more particularly to a battery pack including a venting device.

This application claims the benefit of Korean Patent Application No. 10-2024-0032552, filed on March 7, 2024, the disclosure of which is incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

As secondary batteries are used in mobility, there is a growing demand for their safety. In the event of an accident, such as a fire, in a secondary battery used for mobility, the driver's life can be endangered, so research on technologies to improve the safety of secondary batteries is essential.

### [Summary]

### [Technical Problem]

The technical challenge of the present disclosure is to provide a battery pack that includes a venting device.

### [Technical Solution]

To address the above challenges, the technical ideas of the present disclosure provide a battery pack including: a pack frame having an accommodation space; a battery cell assembly accommodated in the accommodation space of the pack frame and including a battery cell; and a venting device mounted on the pack frame, and configured to open and close an internal passage in response to pressure in the accommodation space of the pack frame, wherein the venting device is accommodated entirely within a venting passage of the pack frame provided between an inner wall and an outer wall of the pack frame.

In exemplary embodiments, the venting device includes: a base plate mounted to the inner wall of the pack frame, and having a passage communicating with a through-hole in the inner wall of the pack frame; an open/close cover configured to open and close the passage of the base plate; a spring providing resilience to the open/close cover to cause the open/close cover to close the passage in the base plate; and a cap body fixed to the base plate, and supporting the spring.

In exemplary embodiments, the open/close cover is configured to move between a closed position closing the passage of the base plate and an open position opening the passage of the base plate, wherein the closed position of the open/close cover is more proximate to the inner wall than the open position of the open/close cover, wherein the spring is configured to press the open/close cover in a direction from the outer wall toward the inner wall.

In exemplary embodiments, when the open/close cover is in the closed position, the spring does not penetrate the accommodation space of the pack frame.

In exemplary embodiments, one end of the spring contacts the cap body and the other end of the spring contacts the open/close cover.

In exemplary embodiments, the cap body includes a protruding part supporting the spring.

In exemplary embodiments, the battery pack further includes: a fastening bolt coupled to the inner wall of the pack frame, and comprising a protruding part protruding from the inner wall of the pack frame in a direction from the inner wall of the pack frame toward an outer wall of the pack frame; and a nut threaded onto the protruding part of the fastening bolt, wherein the base plate includes a fastening hole into which the protruding part of the fastening bolt is inserted, and the base plate is fixed to the inner wall of the pack frame by fitting the nut onto the protruding part of the fastening bolt.

In exemplary embodiments, the base plate is pressed against a surface of the inner wall of the pack frame that faces the outer wall of the pack frame.

In exemplary embodiments, the outer wall of the pack frame includes a through-hole that communicates the venting passage of the pack frame with an external space outside of the pack frame.

In exemplary embodiments, the venting device is exposed to the outside through the through-holes in the outer wall of the pack frame.

In exemplary embodiments, the pack frame includes a bottom frame supporting the battery cell assembly and a side frame on the bottom frame, wherein the venting device is mounted on the side frame.

In exemplary embodiments, the battery pack further includes a pack lead coupled to the side frame to cover the battery cell assembly accommodated in the pack frame.

### [Advantageous Effects]

According to exemplary embodiments of the present disclosure, the venting device is mounted to the pack frame such that it does not occupy the accommodation space of the pack frame accommodating the battery cells, thereby improving the space utilization and energy density of the battery pack.

According to exemplary embodiments of the present disclosure, the venting device is mounted on the pack frame so as not to occupy the accommodation space of the pack frame, so that the venting device can be mounted on different parts of the pack frame without being limited to the installation location and number of valve structures.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a perspective view illustrating a battery pack according to exemplary embodiments of the present disclosure.
FIG. 2 is a side view illustrating a portion of a battery pack according to exemplary embodiments of the present disclosure.
FIG. 3 is a side view illustrating a venting device according to exemplary embodiments of the present disclosure.
FIG. 4 is a cross-sectional view of a battery pack with the venting device in a closed state.
FIG. 5 is a cross-sectional view of a battery pack with the venting device in an open state.
FIGS. 6a and 6b are cross-sectional views illustrating a method of manufacturing a battery pack according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

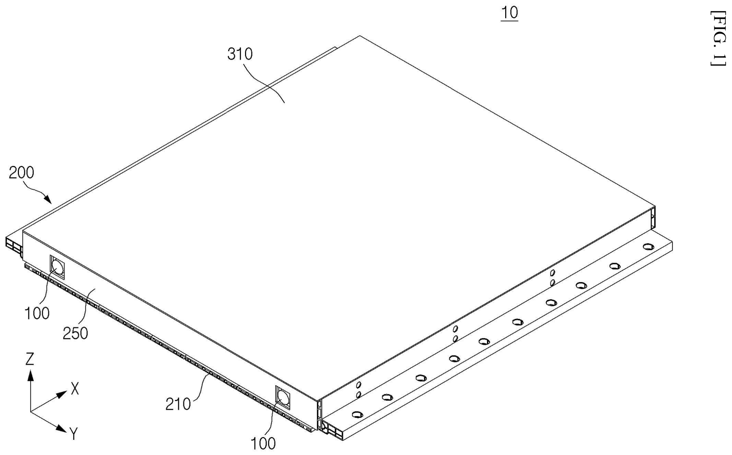

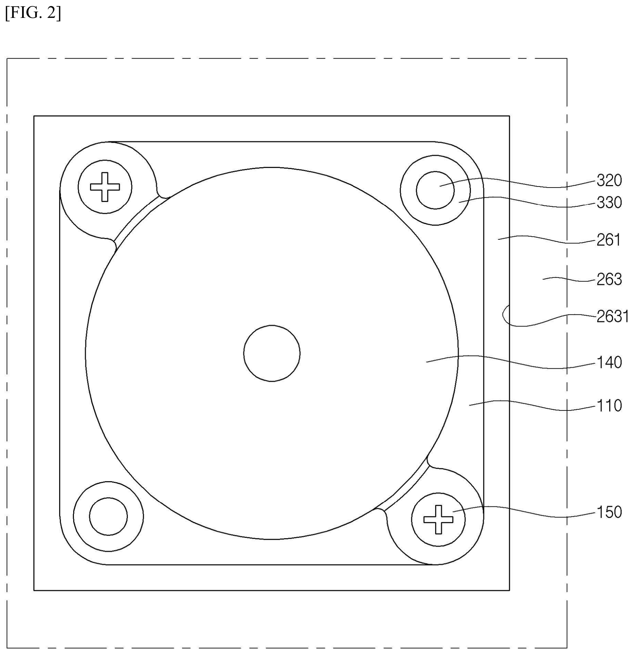

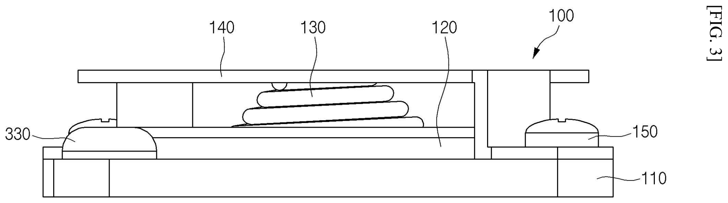

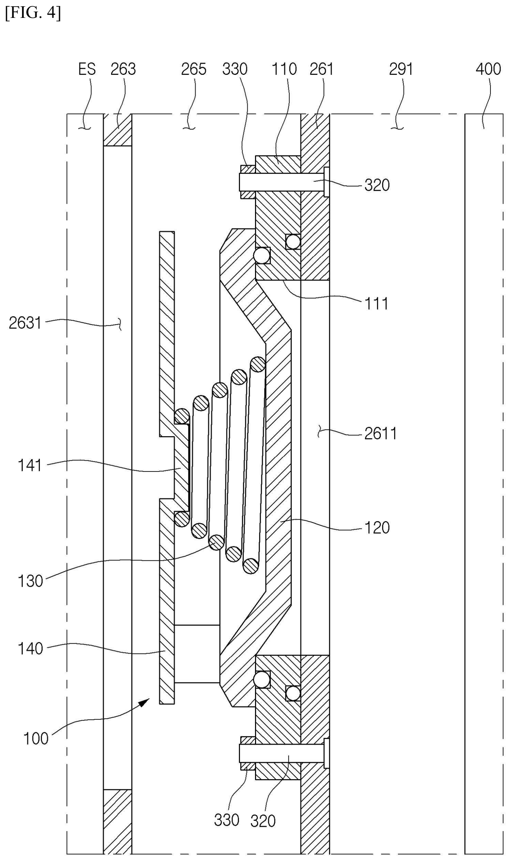

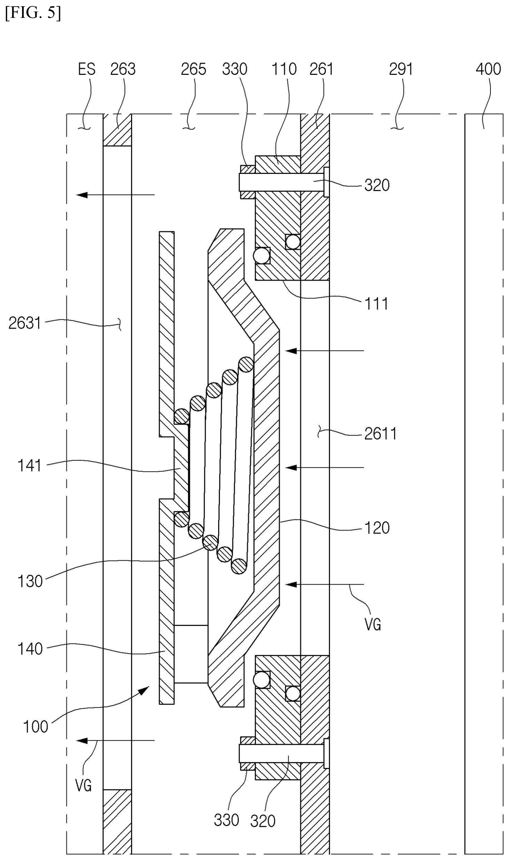

FIG. 1 is a perspective view illustrating a battery pack 10 according to exemplary embodiments of the present disclosure. FIG. 2 is a side view illustrating a portion of a battery pack 10 according to exemplary embodiments of the present disclosure. FIG. 3 is a side view illustrating a venting device 100, according to exemplary embodiments of the present disclosure. FIGS. 4 and 5 are cross-sectional views illustrating portions of a battery pack 10 according to exemplary embodiments of the present disclosure, wherein FIG. 4 is a cross-sectional view illustrating the battery pack 10 with the venting device 100 in a closed state, and FIG. 5 is a cross-sectional view illustrating the battery pack 10 with the venting device 100 in an open state.

Referring to FIGS. 1 through 5, the battery pack 10 may include a pack frame 200, a pack lid 310, a battery cell assembly 400, and a venting device 100.

The pack frame 200 may provide an accommodation space 291 in which the battery cell assembly 400 and various electrical components are accommodated. The pack frame 200 may include a bottom frame 210 and a side frame 250. The bottom frame 210 and the side frame 250 may define the accommodation space 291.

The bottom frame 210 may support the battery cell assembly 400. The bottom frame 210 may have a generally flat plate shape extending in a first horizontal direction (e.g., X direction) and a second horizontal direction (e.g., Y direction).

The side frame 250 may be disposed on an edge of the bottom frame 210 and may extend continuously along the edge of the bottom frame 210 to enclose the battery cell assembly 400. For example, the side frame 250 may include a first segment and a second segment that are opposed in a first horizontal direction (e.g., X direction), and a third segment and a fourth segment that are opposed in a second horizontal direction (e.g., Y direction). The first segment of the side frame 250 may be at a front of the battery pack 10, and the second segment of the side frame 250 may be at a rear of the battery pack 10.

The side frame 250 and the bottom frame 210 of the pack frame 200 may each include an inner wall 261 and an outer wall 263. The inner wall 261 may define an accommodation space 291 of the pack frame 200. The outer wall 263 may comprise the exterior of the pack frame 200 and may be exposed to the exterior space ES on the outside of the pack frame 200. The inner wall 261 and the outer wall 263 may be spaced apart from each other, and a space may be provided between the inner wall 261 and the outer wall 263. A venting passage 265 may be provided between the inner wall 261 and the outer wall 263 of the pack frame 200. The venting passage 265 may guide the flow of gases within the interior of the pack frame 200 and may include a mounting space in which the venting device 100 is mounted.

A pack lid 310 may be coupled to the pack frame 200 to cover the battery cell assembly 400 accommodated in the pack frame 200. The pack lid 310 may cover the accommodation space 291 of the pack frame 200 such that the accommodation space 291 of the pack frame 200 is enclosed. The pack lid 310 may be coupled to the upper end of the side frame 250. The pack lid 310 may have a generally flat plate shape extending in a first horizontal direction (e.g., X direction) and a second horizontal direction (e.g., Y direction).

The battery cell assembly 400 may be provided within the accommodation space 291 of the pack frame 200. The battery cell assembly 400 may correspond to a battery module or cell-to-pack structure. The battery pack 10 may include one or a plurality of battery cell assemblies 400. In exemplary embodiments, the battery pack 10 may include a plurality of battery cell assemblies 400 arranged in a first horizontal direction (e.g., X direction) and/or a second horizontal direction (e.g., Y direction).

The battery cell assembly 400 may include a plurality of battery cells. The individual battery cells are the basic unit of a lithium-ion battery, i.e., a secondary battery. Each battery cell may include an electrode assembly, an electrolyte, and a cell case. The electrode assembly embedded in the cell case may include a positive electrode, a negative electrode, and a separator interposed between the positive electrode and the negative electrode. The electrode assembly may be one of a jelly-roll type and a stack-type, depending on the form of assembly. A jelly-roll type electrode assembly may include a winding structure of a positive electrode, a negative electrode, and a separator interposed between them. A stack-type electrode assembly may include a plurality of positive electrodes and a plurality of negative electrodes stacked in sequence, and a plurality of separators interposed therebetween. The positive electrode may include a positive electrode current collector and a positive electrode active material. The negative electrode may include a negative electrode current collector and a negative electrode active material.

The plurality of battery cells may be connected in series and/or parallel. In one example, the plurality of battery cells may be connected in series with each other. In one example, the plurality of battery cells may be connected in parallel to each other. In one example, when defining a set of two or more battery cells connected in parallel to each other as a bank, one bank of two or more battery cells connected in parallel to each other and another bank of two or more battery cells connected in parallel with each other may be connected in series to each other.

The individual battery cells may be pouch-type battery cells, cylindrical battery cells, or prismatic battery cells. The electrode assembly of a pouch-type battery cell is embedded in a pouch cell case including an aluminum laminated sheet. The electrode assembly of a cylindrical battery cell is embedded in a cylindrical metal can. The electrode assembly of the prismatic battery cell is embedded in a prismatic metal can.

The venting device 100 may be mounted to the pack frame 200. In FIG. 1, the venting device 100 is illustrated as being mounted to a first segment of the side frame 250 at the front of the side frame 250, but is not limited thereto, and the venting device 100 may be mounted to at least one of the segments of the side frame 250, and may also be mounted to the bottom frame 210.

The venting device 100 may be configured to open and close the internal passage based on pressure in the accommodation space 291 of the pack frame 200. The venting device 100 may be configured to switch between a closed state and an open state based on pressure in the accommodation space 291 of the pack frame 200.

In a closed state of the venting device 100, the venting device 100 may close the passage between the external space ES and the accommodation space 291 of the pack frame 200 to block gas flow between the external space ES and the accommodation space 291 of the pack frame 200. In an open state of the venting device 100, the venting device 100 may open the passage between the external space ES and the accommodation space 291 of the pack frame 200 to allow gas flow between the external space ES and the accommodation space 291 of the pack frame 200.

The venting device 100 may be in a closed state when the pressure in the accommodation space 291 of the pack frame 200 is below a preset threshold value, and the venting device 100 may be in an open state when the pressure in the accommodation space 291 of the pack frame 200 exceeds the preset threshold value. When the pressure in the accommodation space 291 of the pack frame 200 exceeds the preset threshold value, the venting device 100 may be in an open state, and the gas in the accommodation space 291 of the pack frame 200 may be released into the external space ES to relieve the pressure in the accommodation space 291 of the pack frame 200. When the pressure in the accommodation space 291 of the pack frame 200 is relieved such that the pressure in the accommodation space 291 of the pack frame 200 is below a preset threshold, the venting device 100 may transition from the open state to the closed state.

The venting device 100 may be installed within a venting passage 265 provided between the inner wall 261 and the outer wall 263 of the pack frame 200. In exemplary embodiments, the venting device 100 may be mounted to the pack frame 200 such that its entirety is accommodated within the venting passage 265 of the pack frame 200. In exemplary embodiments, the venting device 100 may be provided entirely between the inner wall 261 and the outer wall 263 of the pack frame 200. In exemplary embodiments, components of the venting device 100 may be mounted to the pack frame 200 such that they do not penetrate within the accommodation space 291 of the pack frame 200. When the venting device 100 is mounted to the side frame 250, the thickness of the venting device 100 along the thickness direction of the side frame 250 may be less than the thickness of the side frame 250. When the venting device 100 is mounted on the bottom frame 210, the thickness of the venting device 100 along the thickness direction of the bottom frame 210 may be less than the thickness of the bottom frame 210.

The inner wall 261 of the pack frame 200 may include a through-hole 2611 communicating with the accommodation space 291 of the pack frame 200. The outer wall 263 of the pack frame 200 may include a through-hole 2631 communicating with the external space ES. A venting passage 265 of the pack frame 200 may communicate with the external space ES through the through-hole 2631 of the outer wall 263. The venting device 100 may be exposed to the outside of the battery pack 10 through the through-holes 2631 in the outer wall 263 of the pack frame 200.

The venting device 100 may include a base plate 110, an open/close cover 120, a spring 130, and a cap body 140.

The base plate 110 may be mounted to the inner wall 261 of the pack frame 200. The base plate 110 may be pressed against an outer surface of the inner wall 261 of the pack frame 200 that faces the outer wall 263. The base plate 110 may include a passage 111 that communicates with a through-hole 2611 in the inner wall 261 of the pack frame 200. The passage 111 of the base plate 110 may communicate with the accommodation space 291 of the pack frame 200 through the through-hole 2611 of the inner wall 261 of the pack frame 200. A sealing ring may be disposed between the inner walls 261 of the pack frame 200 to prevent gas leakage.

The open/close cover 120 can open and close the passage 111 of the base plate 110. The open/close cover 120 can switch between a closed position that closes the passage 111 of the base plate 110 and an open position that opens the passage 111 of the base plate 110, depending on pressure in the accommodation space 291 of the pack frame 200. In the closed state of the venting device 100, the open/close cover 120 may be in the closed position. In an open state of the venting device 100, the open/close cover 120 may be in an open position. The open/close cover 120 may be open/close to move linearly between the open and closed positions. The closed position of the open/close cover 120 may be closer to the inner wall 261 than the open position of the open/close cover 120.

When the open/close cover 120 is in the closed position, the open/close cover 120 may close the passage 111 of the base plate 110 to the external space ES such that the passage 111 of the base plate 110 does not communicate with the external space ES. When the open/close cover 120 is in the closed position, gas flow may be blocked between the accommodation space 291 of the pack frame 200 and the external space ES.

When the open/close cover 120 is in the open position, the open/close cover 120 can open the passage 111 of the base plate 110 to the external space ES such that the passage 111 of the base plate 110 communicates with the external space ES. When the open/close cover 120 is in the open position, gas can flow from the accommodation space 291 of the pack frame 200 to the external space ES through the passage 111 of the base plate 110.

The cap body 140 may be fixed to the base plate 110. The cap body 140 may contact one end of the spring 130 and may support one end of the spring 130. The cap body 140 may include a support part supporting one end of the spring 130, and a connecting part extending between the support part and the base plate 110. The support part of the cap body 140 may include a protruding part that supports the spring 130. The connecting part of the cap body 140 may be fastened to the base plate 110 via bolts 150. By the connecting part of the cap body 140 being fastened to the base plate 110 via the bolts 150, the cap body 140 may be fixed to the base plate 110.

The spring 130 may provide resilience to the open/close cover 120 in a direction from an open position of the open/close cover 120 toward a closed position. For example, the spring 130 may be configured to compress the open/close cover 120 in a direction from the outer wall 263 toward the inner wall 261. The spring 130 may be provided between the cap body 140 and the open/close cover 120. The cap body 140 may support one end of the spring 130, and the open/close cover 120 may support the other end of the spring 130. In exemplary embodiments, the spring 130 may be a coil spring. The spring 130 may be mounted to the cap body 140 such that a portion thereof is wound around a protruding part 141 of the cap body 140.

As shown in FIG. 4, when the pressure in the accommodation space 291 of the pack frame 200 is below a predetermined threshold, the open/close cover 120 may be pressed against the spring 130 and locked in the closed position. When the open/close cover 120 is in the closed position, components of the venting device 100, such as the open/close cover 120 and the spring 130, do not penetrate the accommodation space 291 of the pack frame 200.

As shown in FIG. 5, when the pressure in the accommodation space 291 of the pack frame 200 exceeds a predetermined threshold, the open/close cover 120 may be progressively moved from the closed position toward the open position or from the inner wall 261 toward the outer wall 263. When the open/close cover 120 is positioned in the open position, the venting gas (VG) can be discharged to the external space (ES) through the passage 111 of the base plate 110, the gap between the open/close cover 120 and the base plate 110, the passage between the inner wall 261 and the outer wall 263, and the through-hole 2631 in the outer wall 263.

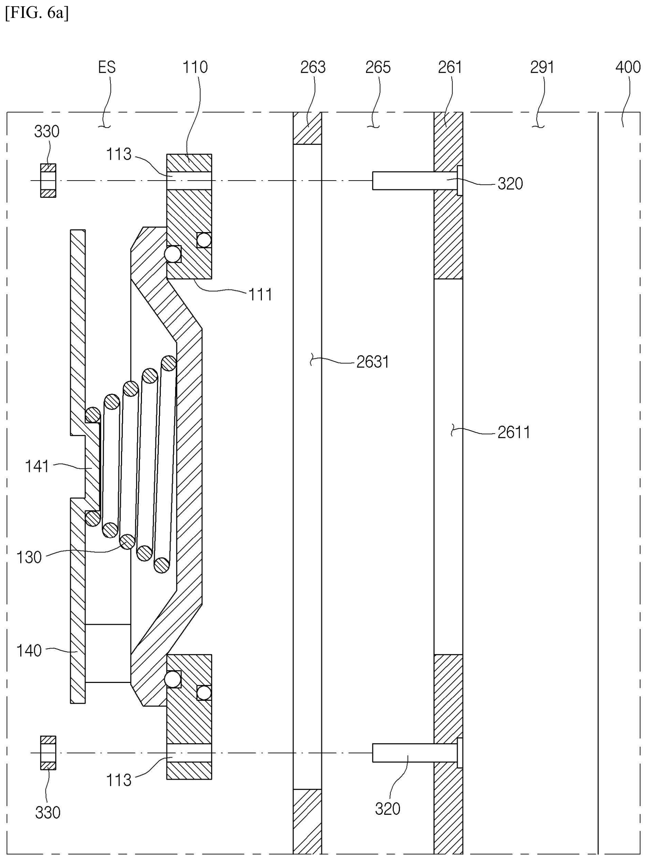

The pack frame 200 may include a fastening bolt 320 for fastening the venting device 100. The fastening bolt 320 may be coupled to an inner wall 261 of the pack frame 200 and may include a protruding part protruding from the inner wall 261 of the pack frame 200 in a direction facing the outer wall 263. The fastening bolt 320 may be a clinching bolt coupled to the inner wall 261 of the pack frame 200 in a self-clinching manner. The protruding part of the fastening bolts 320 may be inserted into the fastening holes (113 in FIG. 6a) of the base plate 110. The battery pack 10 may further include a nut 330 that fits onto the protruding part of the fastening bolt 320. The inner circumferential surface of the nut 330 may be provided with threads that engage threads provided on the outer circumferential surface of the protruding part of the fastening bolt 320. The base plate 110 of the venting device 100 may be fixed to the inner wall 261 of the pack frame 200 by the nut 330 engaging the protruding part of the fastening bolt 320.

In the case of the battery pack according to the comparative example, a portion of the valve structure mounted on the pack frame is configured to penetrate the accommodation space of the pack frame. In this case, the space occupied by the valve structure in the accommodation space of the pack frame is such that battery cells cannot be disposed therein, resulting in poor space utilization of the battery pack. Furthermore, to minimize the space occupied by the valve structure in the accommodation space of the pack frame, there is a limitation on the installation location and number of the valve structure.

According to exemplary embodiments of the present disclosure, the venting device 100 is mounted to the pack frame 200 so as not to occupy the accommodation space 291 of the pack frame 200 accommodating the battery cells, which can improve space utilization and energy density of the battery pack 10.

According to exemplary embodiments of the present disclosure, the venting device 100 is mounted to the pack frame 200 such that it does not occupy the accommodation space 291 of the pack frame 200, so that the venting device 100 can be mounted on different portions of the pack frame 200 without being limited to the installation location and number of valve structures.

### (Second embodiment)

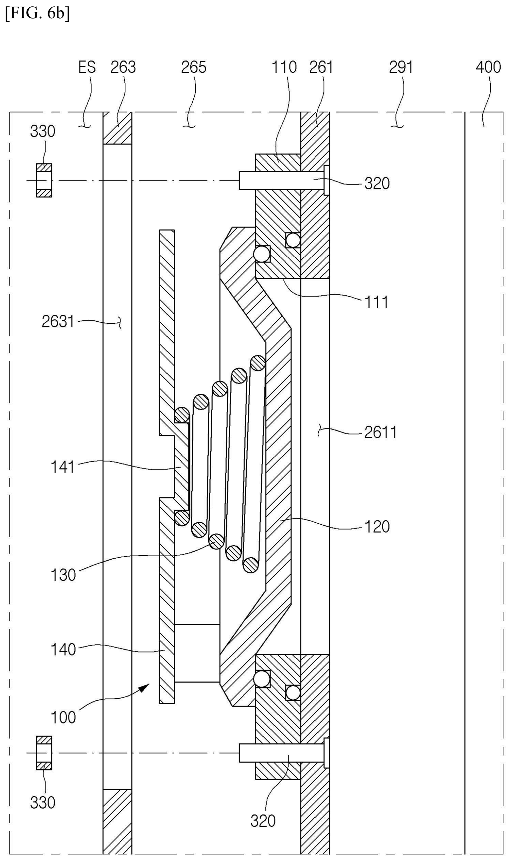

FIGS. 6a and 6b are cross-sectional views illustrating methods of manufacturing a battery pack 10 according to exemplary embodiments of the present disclosure.

Referring to FIG. 6a, a fastening bolt 320 is coupled to the inner wall 261 of the pack frame 200. The fastening bolt 320 may be coupled to the inner wall 261 of the pack frame 200 in a self-clinching manner. The fastening bolt 320 may have a protruding part protruding from the inner wall 261 in a direction away from the inner wall 261 toward the outer wall 263.

Referring to FIG. 6b and FIG. 4, the venting device 100 is assembled to the pack frame 200. Assembling the venting device 100 to the pack frame 200 includes introducing the venting device 100 through the through-hole 2631 of the outer wall 263 into the venting passage 265 of the pack frame 200, positioning the venting device 100 such that a fastening hole 113 in the base plate 110 of the venting device 100 is inserted into a protruding part of the fastening bolt 320, and fixing the base plate 110 of the venting device 100 to the inner wall 261 of the pack frame 200 by threading a nut 330 onto the protruding part of the fastening bolt 320.

According to exemplary embodiments of the present disclosure, the assembly of the venting device 100 to the pack frame 200 may be performed on the outside of the pack frame 200. In this case, it is not necessary to reserve space in the accommodation space 291 of the pack frame 200 for the assembly of the venting device 100, and the assembly operation of the venting device 100 can be performed with the pack lid 310 coupled to the pack frame 200. Because the assembly of the venting device 100 can be performed with the pack lid 310 coupled to the pack frame 200, the assembly of the venting device 100 can be performed during the end-of-line testing phase.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A battery pack comprising:
a pack frame having an accommodation space;
a battery cell assembly accommodated in the accommodation space of the pack frame and comprising a battery cell; and
a venting device mounted on the pack frame, and configured to open and close an internal passage in response to pressure in the accommodation space of the pack frame, wherein
the venting device is accommodated entirely within a venting passage of the pack frame provided between an inner wall and an outer wall of the pack frame.

2. The battery pack of claim 1, wherein
the venting device comprises:
a base plate mounted to the inner wall of the pack frame, and having a passage communicating with a through-hole in the inner wall of the pack frame;
an open/close cover configured to open and close the passage of the base plate;
a spring providing resilience to the open/close cover to cause the open/close cover to close the passage in the base plate; and
a cap body fixed to the base plate, and supporting the spring.

3. The battery pack of claim 2, wherein
the open/close cover is configured to move between a closed position closing the passage of the base plate and an open position opening the passage of the base plate, wherein
the closed position of the open/close cover is more proximate to the inner wall than the open position of the open/close cover, wherein
the spring is configured to press the open/close cover in a direction from the outer wall toward the inner wall.

4. The battery pack of claim 3, wherein
when the open/close cover is in the closed position, the spring does not penetrate into the accommodation space of the pack frame.

5. The battery pack of claim 2, wherein
one end of the spring contacts the cap body and the other end of the spring contacts the open/close cover.

6. The battery pack of claim 2, wherein
the cap body comprises a protruding part supporting the spring.

7. The battery pack of claim 2, further comprising:
a fastening bolt coupled to the inner wall of the pack frame, and comprising a protruding part protruding from the inner wall of the pack frame in a direction from the inner wall of the pack frame toward an outer wall of the pack frame; and
a nut threaded onto the protruding part of the fastening bolt, wherein
the base plate comprises a fastening hole into which the protruding part of the fastening bolt is inserted, and
the base plate is fixed to the inner wall of the pack frame by fitting the nut onto the protruding part of the fastening bolt.

8. The battery pack of claim 7, wherein
the base plate is pressed against a surface of the inner wall of the pack frame that faces the outer wall of the pack frame.

9. The battery pack of claim 1, wherein
the outer wall of the pack frame comprises a through-hole that communicates the venting passage of the pack frame with an external space outside of the pack frame.

10. The battery pack of claim 9, wherein
the venting device is exposed to the outside through the through-holes in the outer wall of the pack frame.

11. The battery pack of claim 1, wherein
the pack frame comprises a bottom frame supporting the battery cell assembly and a side frame on the bottom frame, wherein
the venting device is mounted on the side frame.

12. The battery pack of claim 11, further comprising:
a pack lid coupled to the side frame to cover the battery cell assembly accommodated in the pack frame.
